# EUROPEAN PATENT SPECIFICATION

(11) **EP 1 209 848 B1**
(45) Date of publication and mention of the grant of the patent: **28.12.2005**
(21) Application number: 01124308.6
(22) Date of filing: 19.10.2001
(51) Int. Cl.: H04L 12/12, G06F 1/32, G06F 1/26, H04L 29/06

(54) **Apparatus and method for remote wake-up of a suspended computer**
Vorrichtung und Verfahren zum entfernten Aufwecken eines angehaltenen Rechners
Dispositif et procédé pour une activation à distance d'un ordinateur suspendu

(30) Priority: 28.11.2000 DE 10059014
(43) Date of publication of application: 29.05.2002
(73) Proprietor: WINBOND ELECTRONICS CORPORATION, Hsinchu (TW)
(72) Inventor: Chen, Hsinchi, Tainan City (TW)
(74) Representative: Casalonga, Axel

(56) References cited:
- EP-A- 0 701 195
- EP-A- 0 886 427
- US-A- 4 701 946
- US-A- 5 799 196
- US-A- 5 956 323
- US-A- 6 044 081
- US-A- 6 101 608

## Description

The present invention relates to an apparatus and a method for remote wake-up of a suspended computer and, more particularly, to a method for remote wake-up of a suspended computer via the telecommunication network. The present invention not only can let a computer terminal restore from a power-down mode to the normal working mode, but also can process immediately the message data transferred to the computer terminal via the telecommunication network.

To enhance the convenience of human lives, techniques of telecommunication network have been continually developed, among which the technique of remotely controlling a computer terminal via the telecommunication network tends to be mature. Through this way of control, the efficiency of using a computer terminal to process message data immediately can be effectively increased. In the field of this technique, the user usually confronts the problems of the connection relation and the message control between the telecommunication network and the computer. In other words, whether there exist good communication protocols is the main factor.

EP 0 886 427 discloses a host signal processing (HSP) modem that utilizes processing power of a central processing unit (CPU) of a host computer allowing the host computer to enter a power conserving mode while executing a HSP modem. The HSP modem includes a device that connects to telephone or other communication lines and is operable in a normal mode and a wait mode. In the normal mode, the device generates periodic interrupts of the host processor and in response to those interrupts, the host CPU executes software for processing information transferrer via the device. In the wait mode, periodic interrupts to the host CPU are suspended but a communication interface such as a digital/analog adapter circuit is active and interrupts the host computer for an incoming signal on the communication lines. This device receives from the communication (e.g. telephone) line analog signals and handles ring detection, line connection and hang up signals.

US 5 799 196) discloses a method and related apparatus enabling one station of a network to securely wake up another station on the network, for example within a local area network (LAN). In a LAN, a bridge recognizes messages directed to workstations, a desktop computer or itself on an external communication line and forwards such messages accordingly. These stations transmit and receive information over communication links in the form of packets, the format of which defends upon the communication protocol employed in the LAN. The packets include a header section including a source field and a destination field, and a data section. Every station is identified by a unique address, notably according to Ethernet topology so-called medium access control (MAC) addresses. This MAC address sequence and a synchronisation sequence distinguish non-secure wake up packets, and similarly secure wake up packets, from other types of packets sent to the desktop computer.

US 4 701 946 discloses a method and an apparatus for monitoring the status of the phone line, directly or as reflected by signals from a modem, and controlling the application of power from a power source to a computer, so that the computer is powered in response to an incoming call. The apparatus comprises a controllable power switching element interposed between the power source and the (power input of the) computer and logic circuitry responsive to the status of the phone line, an alarm clock or modem interface. The computer is programmed to take appropriate action when powered up, e.g. by having a software facility for executing a batch job at power up. The I/O port of the computer, to which the modem is connected, is an RS-232 interface.

US 5 799 196 discloses a method and apparatus for providing power management to a computer's main power supply unit so as to provide stand-by power to a logic unit in the computer that remains active to monitor a system environment for predetermined wake-up events. To this end, the capability of a peripheral bus, notably a self-powered universal serial bus (USB) device, is used to provide an alternative low power source and combined with existing power management software.

US 5 799 196 discloses a method and apparatus for conserving power in terminal units that transmit and receive modulated data over a communications loop that is shared with voiceband telephone equipment, whereby ADSL (asymetric digital subscriber line) technology is used to simultaneously transport POTS (plain old telephone service) analog voice phone services along with high speed modulated digital data. The apparatus comprises a modulated data transmitting and receiving unit comprising circuitry to transmit and receive a modulated data signal at frequencies above voiceband, a control signal interface for receiving a start-up signal, which interface may be a PCI (peripheral component interconnect) interface, and further circuitry to transmit a resume signal on the loop upon receipt of the start-up signal on the control interface. This document concerns a different technical field, and conceives an apparatus with more than one interfaces (modulated data transmitting and receiving unit, control signal interface and circuitry to transmit a resume signal), each one for a particular purpose.

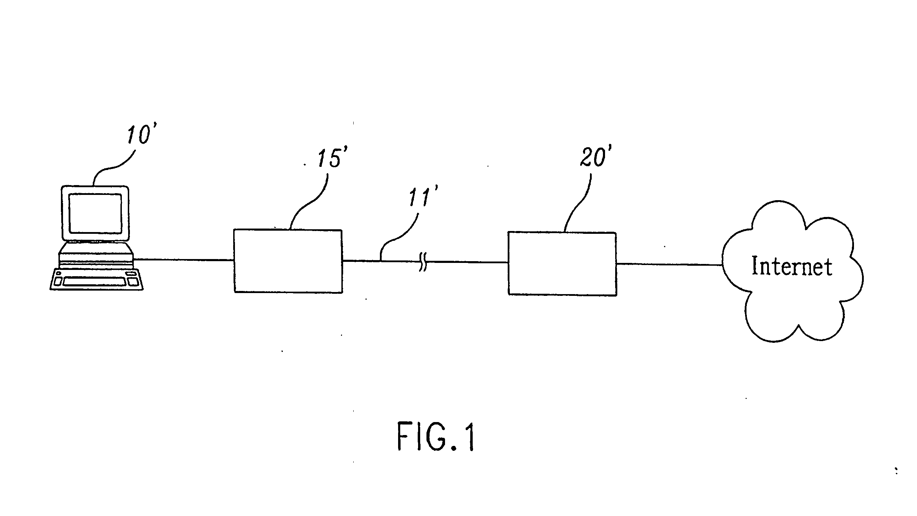

Fig. 1 is a diagram showing the connection between the telecommunication network and a personal computer in prior art. As shown in the figure, a computer terminal 10' is connected to a modem 15', and is then connected to a mainframe 20' of the telephone office via a general telephone line such as an RJ-11 line. Thereby, the computer terminal 10' can be connected to the telecommunication network via the mainframe 20' of the telephone office. Today's computers generally can operate at a power-down mode (or called a suspended state). When the user has left the computer terminal 10' for a long time, the computer terminal 10' will automatically close the operation of the working mode so as to reduce power consumption effectively and to protect the computer terminal 10' from overlong-time usage. When the user goes out and wants to process required message data immediately using the computer terminal 10', the most convenient way is to remotely control the computer terminal 10' via the telecommunication network. The problems confronted at this time are whether the modem 15' has been turned on and connected to the telecommunication network and whether the computer terminal 10' at a suspended state can effectively receive and appreciate the message data transferred by the user via the network. Between these two problems, the latter one is the more important influential factor.

In other words, in existent techniques, there is no better control way for remote wake-up of a suspended computer terminal 10'. The present invention aims to resolve the above problems by using a practical and convenient communication protocol.

Another object, of the present invention is to provide an apparatus and a method for remote wake-up of a suspended computer.

A still further object of the present invention is to provide an apparatus and a method for remote wake-up of a suspended computer so that the suspended computer can be waked up when message data is being received, and can then restore to the normal working mode.

As claimed in claim 1, there is provided an apparatus that is adapted to be connected between a computer terminal and a mainframe of a telephone office for remote wake-up of a suspended computer. The apparatus is adapted to detect message data transferred from said mainframe to said computer terminal to wake up said suspended computer and to let it restore to the normal working mode.

According to the invention, the apparatus is adapted to detect digital ISDN message data transferred from said mainframe and transferred over the ISDN architecture and the apparatus determines whether the service access point identifier (SAPI) field of the address part of this message is zero and whether the terminal endpoint identifier (TEI) field of the address part of this message is 127 to conform that this is an exact message so as to avoid possible wrong wake-ups.

Preferably, the apparatus is a data protocol transform apparatus adapted to transform message data transferred from said mainframe into message data of USB or PCI interface specification.

As claimed in claim 3, there is a provided a method for remote wake-up of a suspended computer by using a data protocol transform apparatus connected between a computer terminal and a mainframe of a telephone office. The method comprises the steps of (1) detecting message data transferred from said mainframe of the telephone office to said computer terminal, and (2) transforming said message data into message data adapted to be received by the interface of the computer terminal so that said suspended computer is waked up when said message data is being received and then restored to the normal working mode.

According to the invention, said detected message data from said mainframe are digital signals transferred over the ISDN architecture network, and whether said ISDN signals represent an exact input message is determined by whether the address part thereof comprises a service access point identifier (SAPI) field having a value of 0 and a terminal end point identifier (ZEI) field having a value of 127.

In the present invention, a data protocol transform apparatus between a computer terminal and a mainframe of the telephone office is exploited to detect the message data transferred from the mainframe of the telephone office to the computer terminal, and to transform them into message data that can be received by the interface of the computer terminal. Thereby, the suspended computer can be waked up when the message data is being received, and can then restore to the normal working mode. Because a computer at a power-down mode (or called a suspended state) can not effectively process immediately various kinds of message data transferred to the computer terminal via the telecommunication network, some information demanding on-line and real-time processing can not be properly processed. The present invention aims to resolve the problem of remotely waking up a suspended computer via the network so that the computer terminal not only can restore from a power-down mode to the normal working mode, but also can process the message data transferred thereto via the telecommunication network.

Preferably, the digital messages transmitted over the integrated service digital network (ISDN) architecture can be detected and transformed into messages of universal serial bus (USB) specification to be decoded by the computer terminal.

The various objects and advantages of the present invention will be more eadily understood from the following non-limiting detailed description when read in onjunction with the appended drawings, in which:
Fig. 1 is a diagram showing the connection between the telecommunication network and a personal computer in prior art;
Fig. 2 is a diagram showing the architecture according to a preferred embodiment of the present invention;
Fig. 3 shows the format of the address field of the ISDN message according to the preferred embodiment of the present invention.

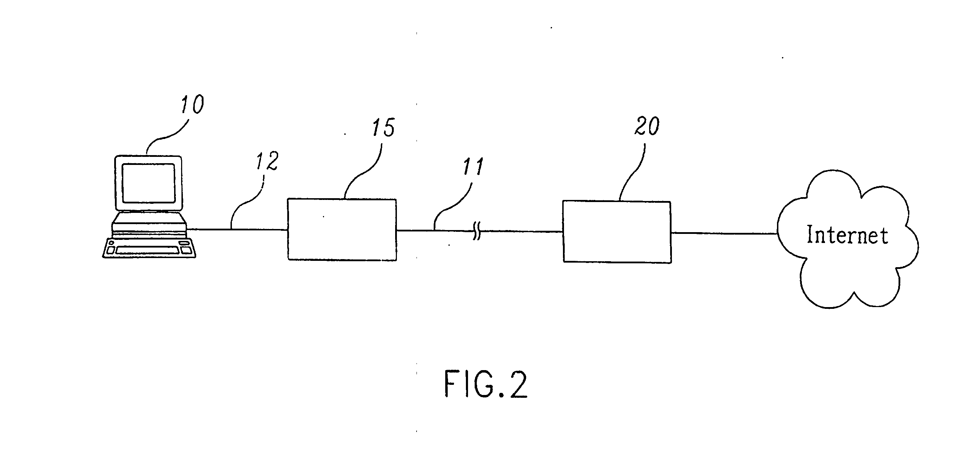

Fig. 2 is a diagram showing the architecture according to a preferred embodiment of the present invention. As shown in the figure, a computer terminal 10 is connected to a data protocol transform apparatus 15 via a transmission line of USB interface specification 12, and is then connected to a mainframe 20 of the telephone office via an ISDN transmission line 11. Thereby, the computer terminal 10 is connected to a telecommunication network, for example the Internet, via the mainframe 20 of the telephone office. When the computer terminal 10 operates at a power-down mode, if there is a message coming from the ISDN transmission line 11, the data protocol transform apparatus 15 will recognize that this is an input message and then issue a remote wake-up message to let the USB interface on the computer terminal 10 restore to the normal working mode so as to perform a driver program to receive this input message. Therefore, power-saving effect can be achieved in normal times, and the input message will not be lost.

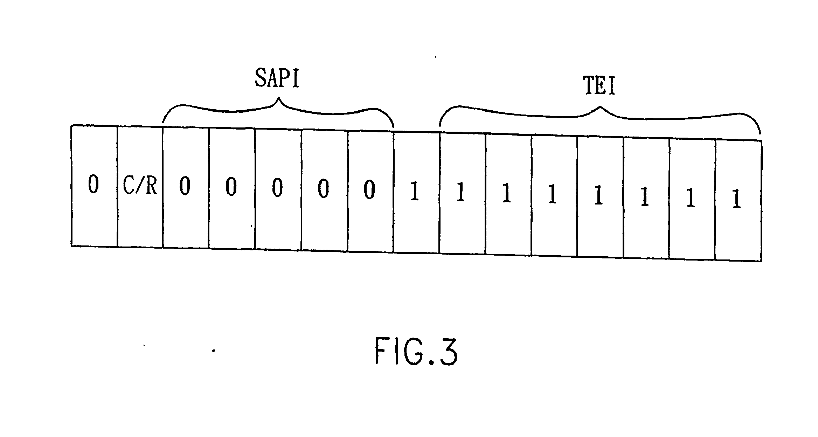

Please refer to Fig. 3. When the data protocol transform apparatus 15 detects that there is an ISDN message incoming, it determines whether the service access point identifier (SAPI) field of the address part of this message is zero, and whether the terminal endpoint identifier (TEI) field of the address part of this message is 127. If the answers are positive, it can be confirmed that this is an input message. Thereby, possible wrong wake-ups can be avoided.

To sum up, the present invention relates to an apparatus and a method for remote wake-up of a suspended computer and, more particularly, to a method for remote wake-up of a suspended computer via the telecommunication network. The present invention not only can let a computer terminal restore from a power-down mode to the normal working mode, but also can process immediately the message data transferred to a computer terminal via the telecommunication network.

Although the present invention has been described with reference to preferred embodiments thereof, it will be understood that the invention is not limited to the details thereof. Any modifications that have been suggested in the foregoing description, and others that might occur to a person skilled in the art are embraced by the present invention as long as they are within the scope of the invention as defined by the appended claims.

## Claims

1. An apparatus (15) adapted to be connected between a computer terminal (10) and a mainframe (20) of a telephone office for remote wake-up of a suspended computer (10), said apparatus (15) being adapted to detect message data transferred from said mainframe (20) to said computer terminal (10) to wake up said suspended computer and to let it restore to the normal working mode, **characterized in that**
said apparatus is adapted to detect digital ISDN message data transferred from said mainframe (20) and transferred over the ISDN architecture and **in that**
the apparatus determines whether the service access point identifier (SAPI) field of the address part of this message is zero and whether the terminal endpoint identifier (TEI) field of the address part of this message is 127 to confirm that this is an exact input message so as to avoid possible wrong wake-ups.

2. The apparatus as claimed in claim 1, wherein said apparatus (15) is a data protocol transform apparatus adapted to transform message data transferred from said mainframe (20) into message data of USB or PCI interface specification.

3. A method for remote wake-up of a suspended computer by using a data protocol transform apparatus (15) connected between a computer terminal (10) and a mainframe (20) of a telephone office, said method comprising the steps of:
(1) detecting message data transferred from said mainframe (20) of the telephone office to said computer terminal (10); and
(2) transforming said message data into message data adapted to be received by the interface of the computer terminal so that said computer is waked up when said message data is being received and then restored to the normal working mode, **characterized in that**
said detected message data from said mainframe (20) are digital signals transferred over the ISDN architecture network and **in that**
whether said ISDN signals represent an exact input message is determined by whether the address part thereof comprises a service access point identifier (SAPI) field having a value of 0 and a terminal end point identifier (TEI) field having a value of 127.

4. The method as claimed in claim 3, wherein said transformed message data that are adapted to be received by the interface of said computer terminal are USB interface message data.

5. The method as claimed in claim 3, wherein said transformed message data that are adapted to be received by the interface of said computer terminal are PCI interface message data.

## Patentansprüche

1. Ein Gerät (15), zum Fern-Aufwecken eines angehaltenen Computers (10) dazu angepasst, zwischen einem Computerendgerät (10) und einem Großrechner (20) eines Fernsprechamts angeschlossen zu werden, wobei das Gerät (15) dazu angepasst ist, von dem Großrechner (20) zu dem Computerendgerät (10) übertragene Nachrichtendaten zu erkennen, um den angehaltenen Computer aufzuwecken und ihn in den normalen Betriebsmodus zurück zu versetzen, **dadurch gekennzeichnet, dass**
das Gerät dazu angepasst ist, von dem Großrechner (20) übertragene und über die ISDN-Architektur übertragene digitale ISDN-Nachrichtendaten zu erkennen, und dass
das Gerät feststellt, ob das Dienstzugangspunktbezeichner (SAPI, Englisch: Service Access Point Identifier)-Feld des Adressteils dieser Nachricht Null ist und ob das Anschlussendpunktbezeichner (TEI, Englisch: Terminal Endpoint Identifier)-Feld des Adressteils dieser Nachricht 127 ist, um zu bestätigen, dass dies eine richtige Eingabenachricht ist zum Vermeiden möglicher falscher Aufweckvorgänge.

2. Das Gerät nach Anspruch 1, wobei das Gerät (15) ein Datenprotokollumwandlungsgerät ist, dazu angepasst, von dem Großrechner (20) übertragene Nachrichtendaten in Nachrichtendaten der Spezifikation der USB- oder PCI-Schnittstelle umzuwandeln.

3. Ein Verfahren zum Fern-Aufwecken eines angehaltenen Computers unter Verwendung eines Datenprotokollumwandlungsgeräts (15), das zwischen einem Computerendgerät (10) und einem Großrechner (20) eines Fernsprechamts angeschlossen ist, wobei das Verfahren die folgenden Schritte umfasst:
(1) Erkennen von Nachrichtendaten, die von dem Großrechner (20) des Fernsprechamts zu dem Computerendgerät (10) übertragen worden sind; und
(2) Umwandeln der Nachrichtendaten in Nachrichtendaten, die dazu angepasst sind, von der Schnittstelle des Computerendgeräts empfangen zu werden, so dass der Computer aufgeweckt wird, wenn die Nachrichtendaten empfangen werden, und dann in den normalen Betriebsmodus zurück versetzt werden,
**dadurch gekennzeichnet, dass**
die erkannten Nachrichtendaten von dem Großrechner (20) digitale Signale sind, die über das Netzwerk der ISDN-Architektur übertragen worden sind, und dass
ob die ISDN-Signale eine richtige Eingabenachricht darstellen, daran festgestellt wird, ob ihr Adressteil einen Dienstzugangspunktbezeichner (SAPI)-Feld mit einem Wert von 0 und einem Anschlussendpunktbezeichner (TEI)-Feld mit einem Wert von 127 umfasst.

4. Das Verfahren nach Anspruch 3, wobei die übertragenen Nachrichtendaten, die dazu angepasst sind, von der Schnittstelle des Computerendgeräts empfangen zu werden, Nachrichtendaten einer USB-Schnittstelle sind.

5. Das Verfahren nach Anspruch 3, wobei die übertragenen Nachrichtendaten, die dazu angepasst sind, von der Schnittstelle des Computerendgeräts empfangen zu werden, Nachrichtendaten einer PCI-Schnittstelle sind.

## Revendications

1. Dispositif (15) adapté pour être connecté entre un terminal informatique (10) et un ordinateur central (20) d'un bureau téléphonique pour la réactivation à distance d'un ordinateur mis en veille (10), ledit dispositif (15) étant adapté pour détecter des données de message transférées dudit ordinateur central (20) audit terminal informatique (10) pour réactiver ledit ordinateur mis en veille et pour le laisser reprendre son mode de travail normal, **caractérisé en ce que**
ledit dispositif est adapté pour détecter des données de message RNIS numériques transférées depuis ledit ordinateur central (20) et transférées via l'architecture RNIS et **en ce que**
le dispositif détermine si le champ d'identificateur de point d'accès de service (SAPI) de la partie adresse de ce message vaut zéro et si le champ d'identificateur de point final du terminal (TEI) de la partie adresse de ce message vaut 127 pour confirmer qu'il s'agit d'un message d'entrée exact afin d'éviter d'éventuelles réactivations erronées.

2. Dispositif selon la revendication 1, dans lequel ledit dispositif (15) est un dispositif de transformation de protocole de données adapté pour transformer des données de message transférées depuis ledit ordinateur central (20) en données de message ayant une spécification d'interface USB ou PCI.

3. Procédé de réactivation à distance d'un ordinateur mis en veille utilisant un dispositif (15) de transformation de protocole de données connecté entre un terminal informatique (10) et un ordinateur central (20) d'un bureau téléphonique, ledit procédé comprenant les étapes consistant à :
(1) détecter des données de message transférées dudit ordinateur central (20) du bureau téléphonique audit terminal informatique (10) ; et
(2) transformer lesdites données de message en données de message adaptées pour être reçues par l'interface du terminal informatique de sorte que ledit terminal est réactivé lors de la réception desdites données de message puis est remis dans son mode de travail normal, **caractérisé en ce que**
lesdites données de message détectées provenant dudit ordinateur central (20) sont des signaux numériques transférés via le réseau à architecture RNIS et **en ce que**
l'on détermine que lesdits signaux RNIS représentent un message d'entrée exact si la partie adresse de celui-ci comprend un champ d'identificateur de point d'accès de service (SAPI) ayant une valeur de 0 et un champ d'identificateur de point final du terminal (TEI) ayant une valeur de 127.

4. Procédé selon la revendication 3, dans lequel lesdites données de message transformées qui sont adaptées pour être reçues par l'interface dudit terminal informatique sont des données de message d'interface USB.

5. Procédé selon la revendication 3, dans lequel lesdites données de message transformées qui sont adaptées pour être reçues par l'interface dudit terminal informatique sont des données de message d'interface PCI.
